(19)

Europäisches
Patentamt
European
Patent Office
Office européen
des brevets

(11) **EP 3 703 008 A1**

(12) **EUROPEAN PATENT APPLICATION**

(43) Date of publication:
**02.09.2020 Bulletin 2020/36**

(21) Application number: **19159400.1**

(22) Date of filing: **26.02.2019**

(51) Int Cl.:
**G06T 7/11** *(2017.01)*         **G06T 7/143** *(2017.01)*
**G06K 9/32** *(2006.01)*         **G06T 7/70** *(2017.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Zenuity AB
417 56 Göteborg (SE)**

(72) Inventors:
• **JÖRGENSEN, Eskil
417 53 Göteborg (SE)**
• **KAHL, Fredrik
412 61 Göteborg (SE)**

(74) Representative: **Zacco Sweden AB
P.O. Box 5581
114 85 Stockholm (SE)**

(54)    **OBJECT DETECTION AND 3D BOX FITTING**

(57)    A method for forming three-dimensional 3D bounding boxes around 3D objects in a monocular image is presented. The method comprises receiving a frame from a camera. The frame comprises an image representative of a portion of a surrounding environment of a vehicle, also the image comprises a plurality of pixels. Further, the method comprises determining, by means of a self-learning model, a plurality of parameters for each pixel of the plurality of pixels, and identifying, by means of the self-learning model, at least one object in the image by selecting a first subset of parameters of the plurality of parameters for each pixel and filtering the plurality of pixels based on each first subset of parameters and at least one predefined criteria in order to generate a reference pixel for each object. The method further comprises selecting a second subset of parameters of the plurality of parameters for each reference pixel, the second subset of parameters comprising **Y** geometrical parameters associated with each object. Next, the method comprises generating a 3D bounding box representation of each identified object based on the determined second subset of parameters, wherein the 3D bounding box representation is defined by **b** geometrical parameters, and wherein **b ≤ Y**.

Fig. 1

EP 3 703 008 A1

**Description**

TECHNICAL FIELD

The present invention relates to the field of computer vision, and more specifically to detecting three dimensional (3D) objects from monocular vision and generating three-dimensional (3D) bounding boxes.

BACKGROUND

The problem of detecting objects of interest and inferring their three-dimensional (3D) properties is a central problem in computer vision with a plethora of applications. In the last decade, a rapid growth in research and development of mobile robotics and autonomous driving (AD) has established a pressing demand for accurate and efficient perception systems to enable safe and real-time machine operation among humans and other moving objects.

While recent advances in the field of two-dimensional (2D) object detection have been important for the development of autonomous vehicles, there is still a need for improvement when it comes to upgrading the detection from the image plane to real world poses. This task, called 3D object detection, naturally lends itself to methods involving radar, LIDAR, stereo or other depth sensors. Modern LIDAR sensors, in particular, are a popular choice for depth and 3D, but there are two important reasons to consider methods only involving monocular vision.

A first reason is that of modularity and redundancy in the perception system (e.g. in the case of sensor failure). The second is the fact that, as of today, image sensors (e.g. cameras) are still significantly cheaper than high precision LIDAR systems, and also cameras are already a common occurrence in modern cars.

Currently known solutions based on 3D object detection based on purely vision may be too slow for real-time applications, and the accuracy of such solutions are sometimes inferior to that of methods using other sensors such as LIDAR sensors. This is true for methods based on both monocular and stereoscopic vision.

There is accordingly a need for a new and improved method for detecting 3D object based on vision data, such as e.g. monocular data, which is accurate and involves less complex processing steps.

SUMMARY OF THE INVENTION

It is therefore an object of the present invention to provide a method for forming/generating three-dimensional (3D) bounding boxes around 3D objects in a monocular image, a non-transitory computer-readable storage medium, a vehicle control device, and a vehicle comprising such a vehicle control device, which alleviate all or at least some of the drawbacks of presently known systems.

This object is achieve by means of a method, a non-transitory computer-readable storage medium, a vehicle control device and a vehicle as defined in the appended claims. The term exemplary is in the present context to be understood as serving as an instance, example or illustration.

According to a first aspect of the present invention, there is provided a method for forming three-dimensional 3D bounding boxes around 3D objects in a monocular image. The method comprises receiving a frame from a camera. The frame comprises an image representative of a portion of a surrounding environment of a vehicle, also the image comprises a plurality of pixels. Further, the method comprises determining, by means of a self-learning model, a plurality of parameters for each pixel of the plurality of pixels, and identifying, by means of the self-learning model, at least one object in the image by selecting a first subset of parameters of the plurality of parameters for each pixel and filtering the plurality of pixels based on each first subset of parameters and at least one predefined criteria in order to generate a reference pixel for each object. The method further comprises selecting a second subset of parameters of the plurality of parameters for each reference pixel, the second subset of parameters comprising **Y** geometrical parameters associated with each object. Next, the method comprises generating a 3D bounding box representation of each identified object based on the determined second subset of parameters, wherein the 3D bounding box representation is defined by **b** geometrical parameters, and wherein $\mathbf{b} \leq \mathbf{Y}.$

3D bounding boxes are often used to improve the efficiency of geometrical operations by using simple volumes to contain more complex objects. Thus, the proposed method is particularly suitable for autonomous driving application to allow for the vehicle control system to identify and track 3D objects in real-time, i.e. during operation.

The camera may be any suitable automotive grade monocular camera (mono camera) capable of operating as a "sensing camera", i.e. functioning as an input sensor for a vehicle control system. A surrounding environment is to be interpreted as a surrounding space of the vehicle, where at least a portion of the surrounding space is within the camera's viewing frustum (may also be referred to as the camera's field of view). The vehicle may be any type of suitable surface vehicle such as e.g. a car, a bus, a truck, a construction vehicle, an autonomous mobile robot for warehouse operations, and so forth.

In the present context, a reference pixel may be construed as a single pixel associated with the plurality of parameters, and which is representative of a specific object in the image

The self-learning model may be any type of trained deep neural network (DNN), such as e.g. a convolutional neural network (CNN). A deep neural network is the present context to be understood as an artificial neural network (ANN) with multiple layers between the input and output layers. The DNN is trained to find the correct mathematical manipulation to turn the input into the output, whether it be a linear relationship or a non-linear relationship.

Further, according to an exemplary embodiment of the present invention, the first subset of parameters comprises a class parameter, and the step of filtering the plurality of pixels comprises comparing the class parameter of each pixel with a minimum threshold value and discarding each pixel associated with a class parameter below the minimum threshold value.

Still further, according to another exemplary embodiment, the first subset of parameters comprises a two-dimensional, 2D, bounding box. Accordingly, the step of filtering the plurality of pixels comprises forming a 2D bounding box for each of at least two pixels, and determining an intersection over union value for each pair of 2D bounding boxes, comparing the determined intersection over union value with a intersecting threshold value, and discarding the pixel with the lowest class parameter of the pair of pixels associated with the pair of 2D bounding boxes if the intersection over union value for the pair of 2D bounding boxes is above the intersecting threshold value.

In other words, the pixel filtering can be done by using a class score map from a soft-max output and the 2D bounding box map. Candidates (pixels) with class score less than a threshold value, $\alpha$, are rejected. From the remaining candidates, a greedy NMS algorithm may be utilized to further filter the pixels and keep all pixels which do not have $IOU_{2D} > Y$, (Y may for example be 0.25, 0.3, 0.35, 0.4), with any other candidate (pixel) of a higher class score.

Further, in accordance with a second aspect of the present invention there is provided a non-transitory computer-readable storage medium storing one or more programs configured to be executed by one or more processors of a vehicle control system, the one or more programs comprising instructions for performing the method according to any one of the embodiments of the first aspect of the invention. With this aspect of the invention, similar advantages and preferred features are present as in the previously discussed first aspect of the invention.

Still further, in accordance with a third aspect of the present invention, there is provided a vehicle control device comprising at least one processor, at least one memory, and at least one communication interface. The at least one processor is configured to execute instructions stored in the memory to perform a method for forming three-dimensional 3D bounding boxes around 3D objects in a monocular image. More specifically, the processor is configured to receive a frame from a camera. The frame comprises an image representative of a portion of a surrounding environment of a vehicle, and the image comprises a plurality of pixels. The at least one processor is further configured to determine, by means of a self-learning model, a plurality of parameters for each pixel of the plurality of pixels, and to identify, by means of the self-learning model, at least one object in the image by selecting a first subset of parameters of the plurality of parameters for each pixel and filter the plurality of pixels based on each first subset of parameters and at least one predefined criteria in order to generate a reference pixel for each object. Further, the at least one processor is configured to select a second subset of parameters of the plurality of parameters for each reference pixel, the second subset of parameters comprising Y geometrical parameters associated with each object, and to generate a 3D bounding box representation of each identified object based on the selected second subset of parameters, wherein the 3D bounding box representation is defined by b geometrical parameters, and wherein $b \leq Y$. With this aspect of the invention, similar advantages and preferred features are present as in the previously discussed first aspect of the invention.

Further, according to a fourth aspect of the present invention there is provided a vehicle comprising a vehicle control device according to any one of the embodiments discussed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

BRIEF DESCRIPTION OF THE DRAWINGS

Further objects, features and advantages of embodiments of the invention will appear from the following detailed description, reference being made to the accompanying drawings, in which:

Fig. 1 is a schematic flow chart representation of a method for forming three-dimensional (3D) bounding boxes around 3D objects in a monocular image, according to an embodiment of the present invention.

Fig. 2 is a schematic flow chart representation of a sub-process of a method for forming 3D bounding boxes around 3D objects in a monocular image, according to an embodiment of the present invention.

Fig. 3 is a schematic block diagram representation of a network architecture for performing a method for forming 3D bounding boxes around 3D objects in a monocular image, according to an embodiment of the present invention.

Fig. 4 is a schematic illustration of a vehicle having a vehicle control device according to an embodiment of the present invention.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components. Moreover, even though the 3D bounding box is in the following discussed as in the form of a cuboid, other types of volumes (e.g. spheres and cylinders) are possible and considered to be within the scope of the present invention. The choice of type of volume is dependent on the intended application and can be controlled by making the corresponding parameter choices.

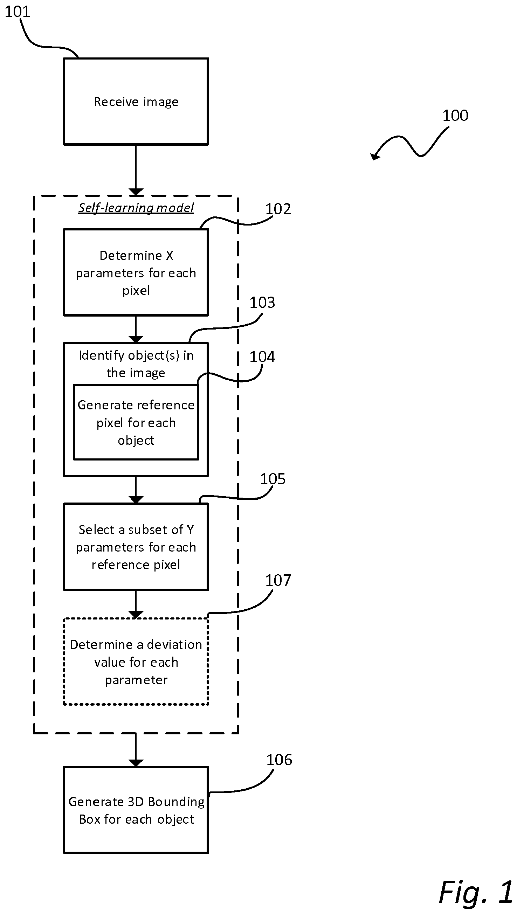

Fig. 1 shows a flow-chart representation of a method 100 for forming three-dimensional (3D) bounding boxes around 3D objects in a monocular image in accordance with an exemplary embodiment of the present invention. The disclosed method 100 is to be construed as a computer implemented method 100 for recognizing 3D objects from two-dimensional (2D) image data and generating 3D bounding boxes which can be implemented in various detection systems, and particularly for use in autonomous driving (AD) applications. A 3D bounding box may sometimes be referred to as a bounding volume, and can be understood as, for a set of objects, a closed volume that completely contains the union of the objects in the set. A 3D bounding box for a set of objects is also a 3D bounding box for the single object consisting of their union (i.e. the union of the set of objects).

The method 100 comprises a step of receiving 101 a frame from a camera where the frame comprises an image (having a plurality of pixels) representative of a portion of a surrounding environment of a vehicle. The camera may be any suitable automotive grade monocular camera (mono camera) capable of operating as a "sensing camera", i.e. functioning as an input sensor for a vehicle control system. A surrounding environment is to be interpreted as a surrounding space of the vehicle, where at least a portion of the surrounding space is within the camera's viewing frustum (may also be referred to as the camera's field of view). The vehicle may any type of suitable surface vehicle such as e.g. a car, a bus, a truck, a construction vehicle, an autonomous mobile robot for warehouse operations, and so forth.

The method 100 further comprises, by means of a (trained) self-learning model, determining 102 a plurality of parameters for each pixel of the image. The plurality of parameters is denoted as "X" in the following. Each parameter is defined by one data entry, but can be part of a larger "target". For example, if one target is a distance to the object from the ego-vehicle (i.e. the vehicle onto which the camera is mounted), that target may be defined by a single parameter or a single data entry (i.e. distance from the centre of the camera to the centre of the object). However, if one target is an orientation (yaw angle) of the object, that target can be defined by two parameters or data entries (e.g. $\sin(\theta)$ and $\cos(\theta)$, where $\theta$ is the yaw angle).

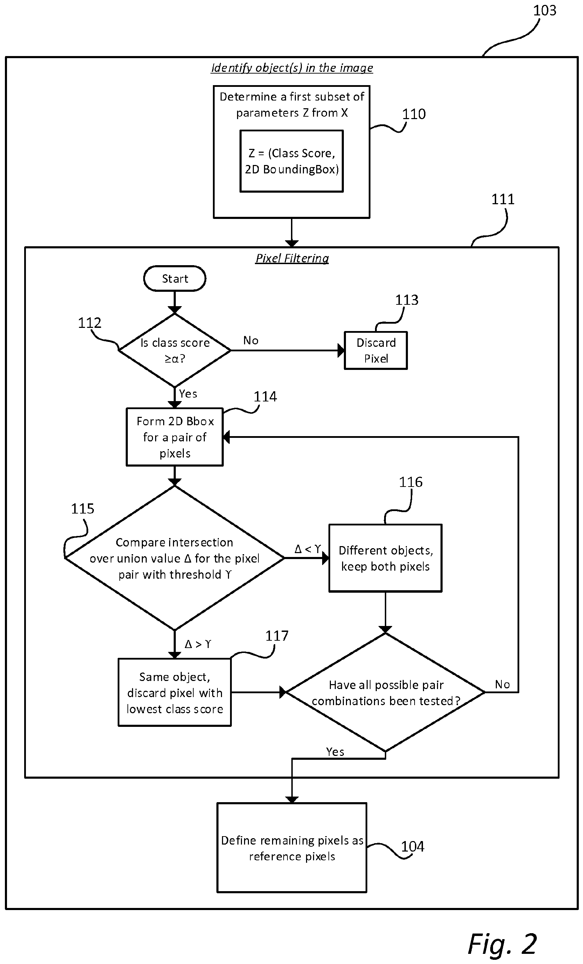

Next, at least one object is identified 103 in the image. The one or more objects are 3D objects represented in the image, such as e.g. other vehicles, pedestrians, or any other 3D body relevant for a vehicle perception system during operation. The object identification 103 is done by determining or selecting a first subset parameters of the plurality of parameters **X** for each pixel of the image. The first subset of parameters will be denoted as **"Z"** in the following and may comprise a class score of a pixel and a 2D bounding box of that pixel. Each pixel is further filtered based on the associated first subset of parameters **Z,** and at least one predefined criteria in order to generate 104 a reference pixel for each object. In the present context, a reference pixel may be construed as a single pixel associated with the plurality of parameters **X,** and which is representative of a specific object in the image. The object identification step 103 will be further exemplified and discussed with reference to Fig. 2.

Further, the method 100 comprises selecting 105 (or determining) a second subset of parameters (for each reference pixel) from the plurality of parameters associated with each reference pixel. The second subset of parameters comprises **"Y"** geometrical parameters associated with each object (represented by a corresponding reference pixel). The second subset of parameters **Y** may for example comprise the 2D bounding box representation, a distance to the object, an orientation of the object, the spatial dimensions of the object, and a set of corner coordinates of a 3D bounding box of the object.

The 2D bounding box representation may be defined by top-left and bottom right corners $(x_1, y_1; x_2, y_2)$, or alternatively, by a reference point (e.g. center point) and a width and length of the box $(x_r, y_r, w, l)$, i.e. 4 parameters. Similarly, the distance to the object can be defined by a single parameter $(d)$, where d can be a distance from the camera centre to the object centre. The orientation of the object can be defined by 2 parameters $(\sin(\theta), \cos(\theta))$, where $\theta$ is a yaw angle in camera coordinates. The spatial dimensions of the object can be defined by 3 parameters (height, width, length). However, it can be advantageous to use the logarithmic values of the spatial dimensions $(\log(h), \log(w), \log(l))$ in order to mitigate issues with negative sizes and determine a loss in terms of relative errors rather than absolute errors. The corner coordinates can be defined by 16 parameters $(x_a, y_a; x_b, y_b; x_c, y_c; x_d, y_d; x_e, y_e; x_f, y_f; x_g, y_g; x_h, y_h)$, i.e. eight corners and two image coordinates. Thus, giving a total of 26 parameters for the **Y** geometrical parameters. It should be noted that a flat earth assumption is used for the 3D bounding box representation where orientation is only defined by the yaw angle, setting roll and pitch angles to zero.

Next, based on the determined/selected **Y** parameters, a 3D bounding box representation of each identified object is generated 106. The 3D bounding box is defined by a set **"b"** geometrical parameters, where $\mathbf{b} \leq \mathbf{Y}$. Moreover, set of parameters **b** defining the 3D bounding box preferably comprises at least one different parameters as compared to the second subset of parameters **Y**. The method 100 may further comprise a step of controlling/steering the vehicle based on the generated 3D bounding boxes.

The 3D bounding box representation (**b**) may for example be defined by a set of spatial dimensions (height, width, length), a centre point in the camera coordinate frame $(x_c, y_c, z_c)$, and a yaw angle $(\theta)$ for the for the 3D bounding box representation. As mentioned, **Y** may comprise 26 parameters, while the 3D bounding box (i.e. **b**) is defined by 7 parameters. Thus, the step of generating 106 a 3D bounding box for each object can be understood as a 3D box optimization, in which the parameters of **b** are tuned so to produce a 3D bounding box that correlates in an optimal manner with the parameters of **Y**. This optimization step 106 or "3D box fitting" can for example be realized by utilizing a linear least squares optimization, a non-linear least square optimization, a weighted non-linear least squares optimization or similar.

By using a greater number of parameters (**Y**) to determine a lower number of parameters (**B**), the whole 3D box generation method is made more redundant. For example, if one of the parameters in the second subset of parameters is inaccurate, the accuracy of the 3D bounding box representation may still be adequate. Moreover, it was realized by the present inventors that the 3D box parameters (**b**) are rather abstract 3D quantities that are not directly linked with how the object appears in the image. Moreover, the loss function (and thus the loss gradient) is more informative due to the higher dimensional regression targets (26 instead of 7 dimensions). Thus, by reparametrizing the 3D bounding box parameters (**b**) to proxy or surrogate parameters (**Y**), which are quantities more closely related to the 2D image domain, the regression task for the self-learning model is eased, rendering the whole object detection and 3D bounding box generation faster. However, it should be noted that the above listed 26 parameters defining **Y** are only an example selection of geometrical parameters, and that some of the 26 parameters may be omitted in order to further increase the output speed of the model. For example, the second subset of parameters may comprise 7-10 geometrical parameters, 10-16 parameters, or 16 - 20 parameters, and so on, depending on the intended application and specifications associated thereto.

Moreover, the second subset of parameters, may further comprise a deviation value for each of the **Y** geometrical parameters. The deviation values are preferably independent for each of the **Y** geometrical parameters. Hereby, the optimization step can be further improved so that "hard-to-estimate" or less relevant parameters are given little weight in the optimization process, which can reduce the processing power needed to generate the 3D bounding boxes. In more detail, the self-learning model can be trained to determine a different deviation value for a specific geometrical parameter in different scenarios. For example, if the image sensor (i.e. camera) sees a first vehicle that is partially obscured by a second vehicle such that the width of the first vehicle is visible but not the length. Then the self-learning model should be arranged so to determine a larger deviation value (higher uncertainty) for the length and a smaller deviation value (lower uncertainty) for the width. In other words, the resulting 3D bounding box representation is forced to be more accurate for the width parameter than the length parameter.

Thus, it can be said that the 3D bounding box representation defined by **b** can be represented by a group of parameters corresponding to the **Y** geometrical parameters associated with each reference pixel of the object within the deviation values associated with each parameter of **Y** of that reference pixel.

Fig. 2 illustrates a flow-chart representation method step of identifying 103 one or more objects in the image according to an exemplary embodiment of the present invention. As discussed in the foregoing the step of identifying 103 at least one object in the image comprises determining 110 a first subset of parameters **Z** from the plurality of parameters **X**. The first subset of parameters **Z** comprises a "class score" parameter and a 2D bounding box parameter. A 2D bounding box may be referred to as a minimum bounding box, and can generally be construed as the smallest enclosing box for a point set in two dimensions is the box with the smallest area within which all points lie. In the present context the 2D bounding box is a box with smallest area within which all pixels of an object in the monocular image lies.

Thus, the 2D bounding box parameter may be represented by the object's top-left and bottom right corner ($x_1$, $y_1$; $x_2$, $y_2$). It should be noted that the term "smallest area" should be interpreted within reason and not be construed as limiting to the scope as the output may contain an error margin, wherefore the output may differ from the theoretical "smallest area".

The step of filtering 111 the plurality of pixels comprises comparing 112 a class parameter (i.e. class score) of each pixel with a predefined minimum threshold value $\alpha$, and discarding 113 each pixel associated with a class score below the minimum threshold value $\alpha$ (threshold value $\alpha$ may for example be 0.5, 0.6, 0.7, or 0.8) . The classification probabilities (i.e. class scores) can for example be obtained from a soft-max layer (i.e. from a function generating a normalized value) and can further be fed together with the 2D bounding box estimates to a non-maximum suppression (NMS) function.

Accordingly, the step of filtering 111 the plurality of pixels further comprises forming 114 a 2D bounding box for a pixel pair. The intersection over union value $IoU_{2D} = \Delta = \frac{A \cap B}{A \cup B}$ for the pixel pair is compared 115 with a threshold $\Upsilon$, and if the intersection over union value is below the threshold $\Upsilon$, it is determined that the pixels pertain to different objects and both pixels are kept 116 (i.e. nothing is done). However, if the intersection over union value is above the threshold $\Upsilon$, it is determined/concluded that the pixels pertain to the same object and the pixel associated with the lowest class score of the two is discarded. These operations 115, 116, 117 are repeated until each object is represented by a single pixel, or more specifically by a single 2D bounding box.

In summary, the pixel filtering 111 generates reference pixels such that each generated reference pixel has a class parameter value above the minimum threshold value $\alpha$ and an associated 2D bounding box has corresponding intersection over union value below the minimum threshold value $\Upsilon$ with any other 2D bounding box associated with any other reference pixel of the image.

Stated differently, the pixel filtering 111 can be understood as a formation of a plurality of bounding box predictions where only predictions above a predefined confidence threshold are considered (i.e. high class scores). However, there still may be multiple high-confidence predictions describing the same object. Therefore, another steep may be needed to remove redundant object predictions so that each object in the image is described by a single bounding box. Accordingly, non-maximum suppression can be used, where highly overlapping bounding boxes (intersection over union value above a certain threshold value) are analysed and all predictions are suppressed or discarded except the highest confidence prediction(s).

The self-learning model discussed herein may for example be in the form of a convolutional neural network (CNN). As readily understood by the skilled artisan, the self-learning model is preferably a trained self-learning model. When the self-learning model is realized as a CNN, the network can learn the network weights **W** and the confidence weights **w** (inverse of the deviation values $\sigma$ in the foregoing) by various methods as will be exemplified in the following.

In general, the self-learning model can be trained by using pixel-wise cross entropy as classification loss, $\mathcal{L}_{cls}$. The loss functions for the regression tasks on the hand can be altered depending on the chosen method.

In a first example learning method (referred to as learning under homoscedastic noise), it is assumed that the statistical noise level is constant dataset. However, the parameters of the noise model are unknown and have to be estimated from training data via maximum likelihood estimates. Since the proposed method 100, has "vectorial" regression outputs, leveraging a standard zero-mean Gaussian assumption on the noise model means that a full (e.g. 26x26 in the present example) covariance matrix is estimated. The covariance matrix can be restricted to be purely diagonal for efficiency, and the following combined loss function is obtained:

$$\mathcal{L}_1 = \mathcal{L}_{cls} + \frac{1}{N} \sum_{j=1}^{N} \sum_{k=1}^{26} \frac{\left\| y_k^{(j)} - f_k(b^{(j)}) \right\|^2}{\sigma_k^2} + \log \sigma_k \qquad (1)$$

The deviations $\sigma_k$ are trained jointly with the network parameters **W**. Here $k$ ranges over the parameters of the regression output (i.e. the output of the self-learning model) and $j$ refers to the index of training samples.

However, the assumption of homoscedastic noise uniformly affecting the network prediction may not be true. For example, sample specific effects such as viewing angles and occlusions may lead to non-homogenous effects in the regressed output provided by the self-learning model. For example, suppose that a 3D corner of an object is occluded. Ideally, the self-learning model is able to regress the variance (i.e. $\sigma^2$ (square of the deviation value)) of the predicted output in order to reduce the impact of unreliable predictions in order to pass this information to the bounding box estimation stage. Thus, according to another learning method for the self-learning model, each input has its own noise model, which - as in the previously described learning method, is assumed to be a zero mean Gaussian with diagonal covariance matrices. In order to predict the variances on unseen data, the network output is extended to provide the respective variances in addition to the regression outputs. The combined loss function now reads:

$$\mathcal{L}_2 = \mathcal{L}_{cls} + \frac{1}{N}\sum_i \frac{y_i - f_i(b_i)^2}{2\sigma_i^2} + \log \sigma_i - \log P_{prior}(\sigma_i^{-2}) \qquad (2)$$

The index i now ranges over all of the output elements for all pixels in the support regions of objects for the entire training set. Support regions are image regions ensured to observe a particular object. More specifically, a support region can be understood as a rectangular region in the centre of an object's 2D bounding box. The size of the support region is chosen in order to balance false negatives and false positives. This type of output can be considered to be in-between fully structured prediction models (e.g. frequently used for semantic segmentation) and sparse outputs of pure object detectors. Therefore, $\sigma_i$ is only estimated from a single sample and a prior on the variances needs to be introduced in order to avoid degeneracies if the regression error approaches 0. A common prior is a Gamma distribution (with parameters $\alpha$ and $\beta$) on the inferred precision $\sigma_i^{-2}$.

Moving on, according to a third learning method, the box fitting weights **"w"** and the network weights **"W"** are trained jointly using an end-to-end intersection-over-union (IoU) loss. The loss function can be defined as:

$$\mathcal{L}_{IoU} = 1 - \frac{1}{|\mathcal{D}|}\sum_{d \in \mathcal{D}} \max_{g \in \mathcal{G}}\left(IoU_{3D}(\widehat{\boldsymbol{b}_d}, \boldsymbol{b}_g)\right) \qquad (3)$$

where $\mathcal{D}$ and $\mathcal{G}$ are the detections and ground truth boxes respectively, and differentiated as

$$\frac{\partial \mathcal{L}_{IoU}}{\partial \boldsymbol{W}} = \sum_{d \in \mathcal{D}} \frac{\partial \mathcal{L}_{IoU}}{\partial \widehat{\boldsymbol{b}_d}}\left(\frac{\partial \widehat{\boldsymbol{b}_d}}{\partial \boldsymbol{y}_d}\frac{\partial \boldsymbol{y}_d}{\partial \boldsymbol{W}} + \frac{\partial \widehat{\boldsymbol{b}_d}}{\partial \boldsymbol{\sigma}_d}\frac{\partial \boldsymbol{\sigma}_d}{\partial \boldsymbol{W}}\right) \qquad (4)$$

Differentiating the box estimator to find the Jacobians $\partial \widehat{\boldsymbol{b}_d}/\partial \boldsymbol{\sigma}_d$ and $\partial \widehat{\boldsymbol{b}_d}/\partial \boldsymbol{y}_d$ can be done through the implicit function theorem. Given the self-learning model outputs $(\boldsymbol{y}, \sigma)$ the optimal bounding box $\hat{\boldsymbol{b}} = argmin_b E(\boldsymbol{b}, \boldsymbol{y}, \sigma)$ will satisfy

$$\nabla_b E(\boldsymbol{b}, \boldsymbol{y}, \sigma)|_{b=\hat{b}} = 0 \qquad (5)$$

which in a region around the optimum defines a mapping

$$\hat{\boldsymbol{b}} : (\boldsymbol{y}, \boldsymbol{\sigma}) \to argmin_b E(\boldsymbol{b}, \boldsymbol{y}, \boldsymbol{\sigma}) \qquad (6)$$

with Jacobian given by

$$\frac{\partial \mathcal{L}_{IoU}}{\partial \boldsymbol{W}} = -\left[\frac{\partial^2 E}{\partial^2 \hat{\boldsymbol{b}}^2}\right]^{-1}\left[\frac{\partial^2 E}{\partial \boldsymbol{y}\partial \hat{\boldsymbol{b}}}\right]^{-1} \approx -\left[\frac{\partial \boldsymbol{r}}{\partial \hat{\boldsymbol{b}}}\right]^{+}\left[\frac{\partial \boldsymbol{r}}{\partial \boldsymbol{y}}\right] \qquad (7)$$

and equivalently for $\sigma$. Further, by using this loss it is possible to define the total training loss as:

$$\mathcal{L}_3 = \mathcal{L}_{cls} + \lambda \mathcal{L}_{IoU} \qquad (8)$$

Training with $\mathcal{L}_{IoU}$ is preferably done as fine-tuning on a self-learning model that has been pre-trained using the second training method discussed in the foregoing, since a non-zero gradient requires a non-zero intersection.

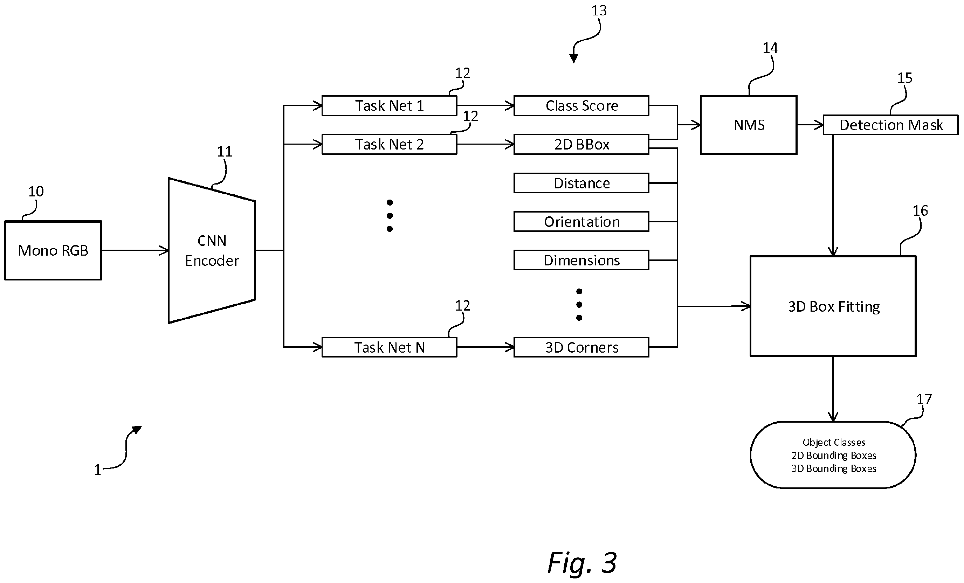

Moving on, Fig. 3 illustrates a block diagram illustrating a pipeline for performing a method in accordance with an exemplary embodiment of the present invention. The network 1 can be referred to as a single stage 3D network, and in summary it can be said that the pipeline comprises the following steps:

- A monocular image 10 is received by a self-learning model 11, here denoted as a convolutional neural network (CNN) encoder. The CNN performs object detection (yielding class scores) and regresses a set of intermediate parameters 13 used later for 3D bounding box fitting 16.
- A non-maximum suppression model 14, 15 is applied to discard redundant detections.
- The desired 3D bounding boxes 17 are subsequently fitted given the intermediate predictions 13 using e.g. a non-linear least squares method 16.

The parameters 13 generated by the self-learning model, for each pixel, are filtered through the NMS 14 and a detection mask 15 in order to remove "candidate pixels" having a class score less than a predefined threshold and to select all pixels which do not have $IoU_{2D} > \Upsilon$ with any other "candidate pixel" of a higher class score. The remaining pixels form reference pixels and accordingly the regression values:

$$Y = \hat{f}(\boldsymbol{b}) \in \mathbb{R}^{26} \qquad\qquad (9)$$

correspond to these reference pixels which are used to fit 3D bounding boxes as will be exemplified in the following. In the present example, 26 parameters are used to define the self-learning model output.

For each reference pixel, the self-learning model 11 (e.g. CNN) outputs a vector **Y** that is used to estimate bounding box parameters $\hat{\boldsymbol{b}} = argmin_b E(\boldsymbol{b}, \boldsymbol{y}, \sigma)$, where

$$E(\boldsymbol{b}, \boldsymbol{y}) = \sum_{i=1}^{26} r_i(\boldsymbol{b}; \boldsymbol{y})^2 = \sum_{i=1}^{26} w_i(y_i - f_i(\boldsymbol{b})))^2 \qquad\qquad (10)$$

is a non-linear least-squares objective, which also contains confidence weights $w_i$ (i.e. the inverse of the square of the associated deviation values). An advantage of the proposed solution is that the weighted non-linear least squares problem can be solved in parallel for each detection (i.e. for each reference pixel), rendering the proposed method faster than currently known comparable solutions.

The weights $w_i$ are preferably set to account for the fact that different regression values (parameters 13) are expressed in different units and have different associated uncertainties. Assuming zero-mean Gaussian aleatoric regression uncertainties, the weights are preferably set to $w_i = 1/\sigma_i$ where $\sigma_i^2$ is the respective variance, which turns equation (10) above into a maximum likelihood estimation. This allows the covariance matrix of the estimated bounding box to be expressed using the Gauss-Newton approximation as

$$\mathrm{Cov}(\hat{\boldsymbol{b}}) = (\nabla_b^2 E(\boldsymbol{b}; \boldsymbol{y}))^{-1} \approx \left( \left(\frac{\partial \boldsymbol{r}}{\partial \boldsymbol{b}}\right)^T \left(\frac{\partial \boldsymbol{r}}{\partial \boldsymbol{b}}\right) \right)^{-1} \qquad\qquad (11)$$

which renders the proposed framework particularly useful e.g. for an object tracking system.

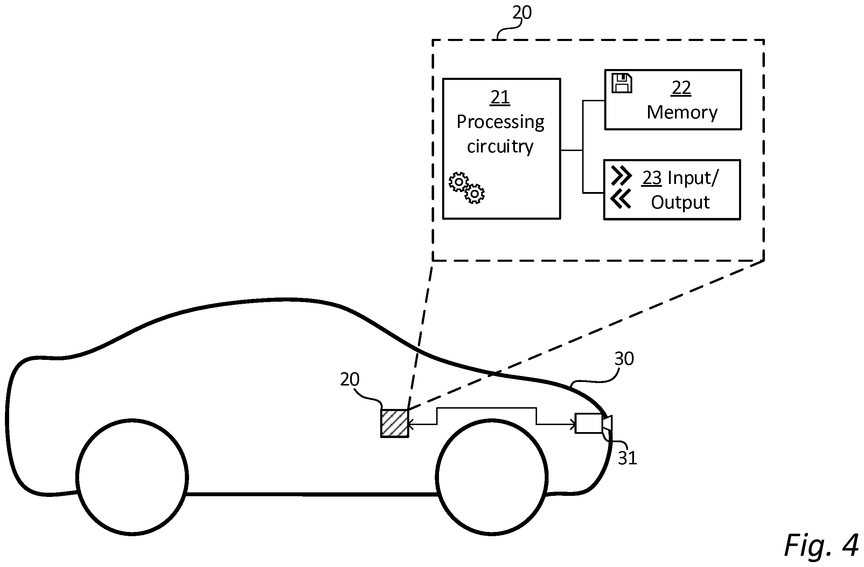

Fig. 4 is a schematic illustration of a vehicle 30 having a vehicle control device 20 according to an exemplary embodiment of the present invention. The vehicle 30 further has a monocular camera configured to capture a frame comprising an image of at least a portion of a surrounding environment of the vehicle 30. The captured frame is subsequently fed to the vehicle control device 20. In the figure the camera 31 is arranged in the front of the vehicle 30, however, other arrangements are feasible and considered to be readily understood by the skilled reader. Moreover, the vehicle may comprise a plurality of cameras 31 arranged to feed a plurality of frames to the vehicle control device 20. The plurality of frames can be converted to a single combined frame depicting a larger portion of the surrounding environment of the vehicle 30, whereby object detection can be performed on the image comprised by the combined frame.

The vehicle control device 20 comprises at least one processor 21 (may be referred to as processing circuitry), at least one memory 22 and at least one sensor interface 23. The processor 21 is configured to execute instructions stored in the memory 22 to perform a method for forming three-dimensional 3D bounding boxes around 3D objects in a monocular image. The method may for example comprise the steps according to any one of the embodiments of the method discussed in the foregoing. Moreover, optionally, depending on functionality provided in the control device 20 one or more communication/antenna interfaces may be provided.

It should be appreciated that a communication/antenna interface may also provide the possibility to acquire sensor data directly or via dedicated sensor control circuitry in the vehicle: for instance GPS data may be acquired through the antenna interface, some sensors in the vehicle may communicate with the control device 20 using a local network setup, such as CAN bus, I2C, Ethernet, optical fibres, and so on. The communication interface may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Moving on, the processor 21 is configured to receive a frame from the camera 31. The frame comprises an image having a plurality of pixels, and being representative of a portion of a surrounding environment of the vehicle 30. The processor 21 is further configured to determine by means of a self-learning model, a plurality of parameters $X$ for each pixel of the plurality of pixels, and to identify at least one object in the image. The object identification is done by determining/selecting a first subset of parameters $Z$ of the plurality of parameters $X$ for each pixel (i.e. $Z \in X$) and filter the plurality of pixels based on each first subset of parameters $Z$ and at least one predefined criteria in order to generate a reference pixel for each object.

Further, the processor 21 is configured to determine or select, a second subset of parameters of the plurality of parameters $X$ for each reference pixel, where the second subset of parameters comprising $Y$ geometrical parameters associated with each object (i.e. $Y \in X$). Next, the processor 21 is configured to generate a 3D bounding box representation of each identified object based on the selected second subset of parameters, wherein the 3D bounding box representation is defined by $b$ geometrical parameters, and wherein $b \leq Y$. Moreover, preferably $b \neq Y$, i.e. the parameters $b$ defining the 3D bounding box representation comprises at least one parameter that is not represented in the second subset of parameters $Y$.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) (associated with the vehicle control device) may be or include any number of hardware components for conducting data or signal processing or for executing computer code stored in memory. The device has an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent embodiments should be apparent for the person skilled in the art.

**Claims**

1. A method for forming three-dimensional 3D bounding boxes around 3D objects in a monocular image, the method comprising:

   receiving a frame from a camera, the frame comprising an image representative of a portion of a surrounding environment of a vehicle, wherein the image comprises a plurality of pixels;
   determining, by means of a self-learning model, a plurality of parameters for each pixel of the plurality of pixels;
   identifying, by means of the self-learning model, at least one object in the image by selecting a first subset of parameters of the plurality of parameters for each pixel and filtering the plurality of pixels based on each first subset of parameters and at least one predefined criteria in order to generate a reference pixel for each object;
   selecting a second subset of parameters of the plurality of parameters for each reference pixel, the second subset of parameters comprising Y geometrical parameters associated with each object;
   generating a 3D bounding box representation of each identified object based on the determined second subset of parameters, wherein the 3D bounding box representation is defined by $\mathbf{b}$ geometrical parameters, and wherein $\mathbf{b} \leq \mathbf{Y}$.

2. The method according to claim 1, wherein the first subset of parameters comprises a class parameter, and wherein the step of filtering the plurality of pixels comprises:
   comparing the class parameter of each pixel with a minimum threshold value and discarding each pixel associated with a class parameter below the minimum threshold value.

3. The method according to claim 2, wherein the first subset of parameters comprises a two-dimensional, 2D, bounding box, and wherein the step of filtering the plurality of pixels comprises:

   forming a 2D bounding box for each of at least two pixels;
   determining an intersection over union value for each pair of 2D bounding boxes, comparing the determined intersection over union value with a intersecting threshold value, and discarding the pixel with the lowest class parameter of the pair of pixels associated with the pair of 2D bounding boxes if the intersection over union value for the pair of 2D bounding boxes is above the intersecting threshold value.

4. The method according to any one of the preceding claims wherein the self-learning model is a convolutional neural network.

5. The method according to any one of the preceding claims, wherein the step of generating the 3D bounding box comprises selecting the $\mathbf{b}$ geometrical parameters based on a relationship with the $\mathbf{Y}$ geometrical parameters.

6. The method according to any one of the preceding claims, wherein the second subset of parameters further comprises a deviation value for each of the $\mathbf{Y}$ geometrical parameters.

7. The method according to claim 6, wherein the deviation value for each the $\mathbf{Y}$ geometrical parameters is independent for each of the $\mathbf{Y}$ geometrical parameters.

8. The method according to claim 6 or 7, wherein the step of generating the 3D bounding box of each identified object comprises optimizing a value for each parameter of said $\mathbf{b}$ geometrical parameters based on the $\mathbf{Y}$ geometrical parameters and the associated deviation values.

9. The method according to any one of the preceding claims, wherein the $\mathbf{b}$ geometrical parameters comprises a set of spatial dimensions for the 3D bounding box representation, a centre point for the 3D bounding box representation, and a yaw angle for the 3D bounding box representation.

10. The method according to any one of the preceding claims, wherein the $\mathbf{Y}$ geometrical parameters comprises a two-dimensional, 2D, bounding box representation, a distance to the object, an orientation of the object, a set of spatial dimensions of the object, and a set of corner coordinates of a 3D bounding box of the object.

11. A non-transitory computer-readable storage medium storing one or more programs configured to be executed by one or more processors of a vehicle control system, the one or more programs comprising instructions for performing the method according to any one of the preceding claims.

**12.** A vehicle control device comprising:

at least one processor;
at least one memory;
at least one sensor interface;
wherein the at least one processor is configured to execute instructions stored in the memory to perform a method for forming three-dimensional 3D bounding boxes around 3D objects in a monocular image, wherein the at least one processor is configured to:

receive a frame from a camera, the frame comprising an image representative of a portion of a surrounding environment of a vehicle wherein the image comprises a plurality of pixels;
determine, by means of a self-learning model, a plurality of parameters for each pixel of the plurality of pixels;
identify, by means of the self-learning model, at least one object in the image by selecting a first subset of parameters of the plurality of parameters for each pixel and filter the plurality of pixels based on each first subset of parameters and at least one predefined criteria in order to generate a reference pixel for each object;
select a second subset of parameters of the plurality of parameters for each reference pixel, the second subset of parameters comprising **Y** geometrical parameters associated with each object;
generate a 3D bounding box representation of each identified object based on the selected second subset of parameters, wherein the 3D bounding box representation is defined by **b** geometrical parameters, and wherein **b** ≤ **Y.**

**13.** The vehicle control device according to claim 12, wherein the first subset of parameters comprises a class parameter, and wherein the at least one processor is configured to compare the class parameter of each pixel with a minimum threshold value and discarding each pixel associated with a class parameter below the minimum threshold value in order to filter the plurality of pixels.

**14.** The vehicle control device according to claim 12 or 13, wherein the first subset of parameters comprises a two-dimensional, 2D, bounding box, and wherein the at least one processor is configured to:

form a 2D bounding box for each of at least two pixels;
determine an intersection over union value for each pair of 2D bounding boxes, comparing the determined intersection over union value with a intersecting threshold value, and discarding the pixel with the lowest class parameter of the pair of pixels associated with the pair of 2D bounding boxes if the intersection over union value for the pair of 2D bounding boxes is above the intersecting threshold value.

**15.** A vehicle comprising a vehicle control device according to any one of claims 12 - 14.

101

Receive image

100

_Self-learning model_
102

Determine X
parameters for each
pixel

103

Identify object(s) in
the image

104

Generate reference
pixel for each
object

105

Select a subset of Y
parameters for each
reference pixel

107

Determine a deviation
value for each
parameter

106

Generate 3D Bounding
Box for each object

*Fig. 1*

103

**Identify object(s) in the image**

Determine a first subset of
parameters Z from X    110

Z = (Class Score,
2D BoundingBox)

111

**Pixel Filtering**

Start

112    Is class score
≥α?    — No →    Discard
Pixel    113

Yes

Form 2D Bbox
for a pair of
pixels    114

115    Compare intersection
over union value Δ for the pixel
pair with threshold ϒ    — Δ < ϒ →    Different objects,
keep both pixels    116

Δ > ϒ

Same object,
discard pixel with
lowest class score    117    Have all possible pair
combinations been tested?    — No

Yes

Define remaining pixels as
reference pixels    104

*Fig. 2*

Detection Mask 15

3D Box Fitting 16

Object Classes
2D Bounding Boxes
3D Bounding Boxes 17

NMS 14

13

Class Score
2D BBox
Distance
Orientation
Dimensions
• • •
3D Corners

Task Net 1 12
Task Net 2 12
• • •
Task Net N 12

CNN Encoder 11

Mono RGB 10

1

*Fig. 3*

*Fig. 4*

Europäisches
Patentamt

European
Patent Office

Office européen
des brevets

**EUROPEAN SEARCH REPORT**

Application Number

EP 19 15 9400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU BIN ET AL: "Multi-level Fusion Based 3D Object Detection from Monocular Images", 2018 IEEE/CVF CONFERENCE ON COMPUTER VISION AND PATTERN RECOGNITION, IEEE, 18 June 2018 (2018-06-18), pages 2345-2353, XP033476200, DOI: 10.1109/CVPR.2018.00249 [retrieved on 2018-12-14] * abstract * * page 2345, left-hand column, last paragraph - page 2345, right-hand column, paragraph first * * Section 3.1. 2D Region Proposal Generation; page 2347, right-hand column * * Section 3.2. 2D/3D parameters Estimation; page 2347, right-hand column - page 2348, left-hand column * * Section 3.3. Multi-Level Fusion and 3D Localization; page 2348, right-hand column - page 2350, left-hand column * * figures 1, 3 * | 1-15 | INV. G06T7/11 G06T7/143 G06K9/32 G06T7/70 |

-----

-/--

TECHNICAL FIELDS
SEARCHED       (IPC)

G06T
G06K

The present search report has been drawn up for all claims

| Place of search | Date of completion of the search | Examiner |
|---|---|---|
| Munich | 22 October 2019 | Rusu, Alexandru |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 19 15 9400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Erik Linder-Norén ET AL: "Automotive 3D Object Detection Without Target Domain Annotations", <br><br>1 June 2018 (2018-06-01), pages 1-91, XP055615630, <br>Retrieved from the Internet: <br>URL:https://pdfs.semanticscholar.org/ab1b/4518e397546704672d55d619924f6de840eb.pdf <br>[retrieved on 2019-08-27] <br>* abstract * <br>* Section 2.3 2D Object Detection; page 12 - page 14 * <br>* Section 3.8 3D Object Detection - Image-Only Model; page 49 - page 51 * <br>* Section 4.6 3D Object Detection - Image-Only Model; page 66 - page 70 * <br>----- | 1-15 | |
| A | GUPTA ISHAN ET AL: "3D Bounding Boxes for Road Vehicles: A One-Stage, Localization Prioritized Approach Using Single Monocular Images", <br>23 January 2019 (2019-01-23), SERIOUS GAMES; [LECTURE NOTES IN COMPUTER SCIENCE; LECT.NOTES COMPUTER], SPRINGER INTERNATIONAL PUBLISHING, CHAM, PAGE(S) 626 - 641, XP047501258, <br>ISSN: 0302-9743 <br>ISBN: 978-3-642-34128-1 <br>[retrieved on 2019-01-23] <br>* the whole document * <br>----- | 1-15 | TECHNICAL FIELDS SEARCHED (IPC) |
| A | US 2018/032840 A1 (YU JIAHUI [CN] ET AL) 1 February 2018 (2018-02-01) <br>* the whole document * <br>----- | 1-15 | |

The present search report has been drawn up for all claims

| Place of search | Date of completion of the search | Examiner |
|---|---|---|
| Munich | 22 October 2019 | Rusu, Alexandru |

EPO FORM 1503 03.82 (P04C01)

page 2 of 2

## ANNEX TO THE EUROPEAN SEARCH REPORT
## ON EUROPEAN PATENT APPLICATION NO.

EP 19 15 9400

This annex lists the patent family members relating to the patent documents cited in  the above-mentioned European search report.
The members are as contained in the European Patent Office EDP file on
The European Patent Office is in no way liable for these particulars which are merely given for the purpose of information.

22-10-2019

| Patent document cited in search report | Publication date | Patent family member(s) | Publication date |
|---|---|---|---|
| US 2018032840  A1 | 01-02-2018 | CN    106295678  A<br>US    2018032840 A1 | 04-01-2017<br>01-02-2018 |

EPO FORM P0459

For more details about this annex : see Official Journal of the European Patent Office, No. 12/82